(19) Europäisches Patentamt
European Patent Office
Office européen des brevets

(11) **EP 2 916 107 A1**

(12) **EUROPÄISCHE PATENTANMELDUNG**

(43) Veröffentlichungstag:
**09.09.2015 Patentblatt 2015/37**

(51) Int Cl.:
***G01D 5/244*** *(2006.01)*   ***G01D 5/241*** *(2006.01)*

(21) Anmeldenummer: **14157891.4**

(22) Anmeldetag: **05.03.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Finkler, Roland**
**91058 Erlangen (DE)**
• **Forster, Gerhard**
**90592 Schwarzenbruck (DE)**

Bemerkungen:
Geänderte Patentansprüche gemäss Regel 137(2) EPÜ.

(54) **Extrapolation der Feinlage bei einem Lagegeber mit phasenmoduliertem Rohsignal**

(57)    Eine Auswertungseinrichtung (3) führt einem Lagegeber (2) mindestens ein Anregungssignal (U1, U2) zu, das eine Anregungsfrequenz (fA) aufweist. Ein vom Lagegeber (2) abgegebenes Rohsignal (U) oder ein anhand von vom Lagegeber (2) abgegebenen Ursprungssignalen (U3, U4) abgeleitetes Rohsignal (U) oszilliert mit der Anregungsfrequenz (fA). Es weist relativ zu dem mindestens einen Anregungssignal (U1, U2) einen mit der Feinlage ($\varphi$) korrespondierenden Phasenversatz ($\varphi$) auf. Die Auswertungseinrichtung (3) erfasst wiederholt zu einer Anzahl von jeweiligen Erfassungszeitpunkten (t1 bis t4, t(k,l)) jeweils das Rohsignal (U) oder die Ursprungssignale (U3, U4). Die Auswertungseinrichtung (3) ermittelt unter Verwendung der zu den Erfassungszeitpunkten (t1 bis t4, t(k,l)) erfassten oder abgeleiteten Rohsignale (U) jeweils die Feinlage ($\varphi$). Die Auswertungseinrichtung (3) extrapoliert die jeweilige Feinlage ($\varphi$) auf den jeweils letzten Erfassungszeitpunkt (t4, t(K, L)), einen jeweiligen Ausgabezeitpunkt (tA) oder auf einen Zeitpunkt dazwischen. Sie gibt die jeweils ermittelte Feinlage ($\varphi$) zu dem jeweiligen Ausgabezeitpunkt (tA) an eine übergeordnete Einrichtung (17) aus.

FIG 9

S4 — $M3 = U(t3)$

S4 — $M4 = U(t4)$

S5 — $M3' = M3 + 2\pi Qn\delta tM4$

S6 — $\varphi = \varphi(M3', M4)$

S7 — $\varphi = \varphi + QntF$

S8 — $\varphi \longrightarrow 17$

EP 2 916 107 A1

# EP 2 916 107 A1

**Beschreibung**

Die vorliegende Erfindung betrifft ein Ermittlungsverfahren für eine jeweilige Feinlage eines Lagegebers,

- wobei eine Auswertungseinrichtung dem Lagegeber mindestens ein Anregungssignal zuführt, das eine Anregungsfrequenz aufweist,
- wobei ein vom Lagegeber abgegebenes Rohsignal oder ein anhand von vom Lagegeber abgegebenen Ursprungssignalen abgeleitetes Rohsignal mit der Anregungsfrequenz oszilliert und relativ zu dem mindestens einen Anregungssignal einen mit der Feinlage korrespondierenden Phasenversatz aufweist,
- wobei die Auswertungseinrichtung wiederholt zu einem jeweils letzten Erfassungszeitpunkt und zu einer Anzahl von jeweiligen weiteren Erfassungszeitpunkten, die zeitlich vor dem jeweils letzten Erfassungszeitpunkt liegen, jeweils das Rohsignal erfasst oder die Ursprungssignale erfasst und das Rohsignal ableitet,
- wobei die Auswertungseinrichtung unter Verwendung der zu den Erfassungszeitpunkten erfassten oder abgeleiteten Rohsignale jeweils die Feinlage ermittelt,
- wobei die Auswertungseinrichtung die jeweils ermittelte Feinlage zu einem jeweiligen Ausgabezeitpunkt an eine übergeordnete Einrichtung ausgibt.

Die vorliegende Erfindung betrifft weiterhin ein Steuerprogramm für eine Auswertungseinrichtung, wobei das Steuerprogramm Maschinencode umfasst, der von der Auswertungseinrichtung ausführbar ist, wobei die Ausführung des Maschinencodes durch die Auswertungseinrichtung bewirkt, dass die Auswertungseinrichtung

- einem Lagegeber mindestens ein Anregungssignal zuführt, das eine Anregungsfrequenz aufweist, so dass ein vom Lagegeber abgegebenes Rohsignal oder ein anhand von vom Lagegeber abgegebenen Ursprungssignalen abgeleitetes Rohsignal mit der Anregungsfrequenz oszilliert und relativ zu dem mindestens einen Anregungssignal einen mit einer Feinlage des Lagegebers korrespondierenden Phasenversatz aufweist,
- wiederholt zu einem jeweils letzten Erfassungszeitpunkt und zu einer Anzahl von jeweiligen weiteren Erfassungszeitpunkten, die zeitlich vor dem jeweils letzten Erfassungszeitpunkt liegen, jeweils das Rohsignal erfasst oder die Ursprungssignale erfasst und das Rohsignal ableitet,
- unter Verwendung der zu den jeweiligen Erfassungszeitpunkten erfassten oder abgeleiteten Rohsignale jeweils die Feinlage ermittelt und
- die jeweils ermittelte Feinlage zu dem jeweiligen Ausgabezeitpunkt an eine übergeordnete Einrichtung ausgibt.

Die vorliegende Erfindung betrifft weiterhin eine Auswertungseinrichtung zum Ermitteln einer jeweiligen Feinlage eines Lagegebers,

- wobei die Auswertungseinrichtung mindestens einen Anregungsausgang aufweist, über den die Auswertungseinrichtung dem Lagegeber ein Anregungssignal zuführt, das eine Anregungsfrequenz aufweist,
- wobei ein vom Lagegeber abgegebenes Rohsignal oder ein anhand von vom Lagegeber abgegebenen Ursprungssignalen abgeleitetes Rohsignal mit der Anregungsfrequenz oszilliert und relativ zu dem mindestens einen Anregungssignal einen mit der jeweiligen Feinlage korrespondierenden Phasenversatz aufweist,
- wobei die Auswertungseinrichtung einen Rohsignaleingang aufweist, über den die Auswertungseinrichtung wiederholt zu einem jeweils letzten Erfassungszeitpunkt und zu einer Anzahl von jeweiligen weiteren Erfassungszeitpunkten, die zeitlich vor dem jeweils letzten Erfassungszeitpunkt liegen, jeweils ein Rohsignal erfasst, oder mehrere Ursprungssignaleingänge aufweist, über die die Auswertungseinrichtung wiederholt zu einem jeweils letzten Erfassungszeitpunkt und zu einer Anzahl von jeweiligen weiteren Erfassungszeitpunkten, die zeitlich vor dem jeweils letzten Erfassungszeitpunkt liegen, jeweils ein Ursprungssignal erfasst und aus den jeweils erfassten Ursprungssignalen jeweils ein Rohsignal ableitet,
- wobei die Auswertungseinrichtung derart ausgebildet ist, dass sie unter Verwendung der zu den jeweiligen Erfassungszeitpunkten erfassten Rohsignale jeweils die Feinlage ermittelt,
- wobei die Auswertungseinrichtung einen Lagesignalausgang aufweist, über den die Auswertungseinrichtung die jeweils ermittelte Feinlage zu einem jeweiligen Ausgabezeitpunkt an eine übergeordnete Einrichtung ausgibt.

Die vorliegende Erfindung betrifft weiterhin eine Lagegebereinrichtung, wobei die Lagegebereinrichtung eine Auswertungseinrichtung der obenstehend erläuterten Art und einen Lagegeber aufweist, wobei die Auswertungseinrichtung über ihren mindestens einen Anregungsausgang und über ihren Rohsignaleingang oder ihre Ursprungssignaleingänge mit dem Lagegeber verbunden ist und über ihren Lagesignalausgang mit einer übergeordneten Einrichtung verbindbar ist.

Die oben genannten Gegenstände sind beispielsweise aus der EP 2 527 796 A2 bekannt.

Lagegeber, die ein (= 1) Rohsignal liefern, das relativ zu dem mindestens einen Anregungssignal einen mit der Feinlage korrespondierenden Phasenversatz aufweist, sind bekannt, siehe die bereits genannte EP-Publikation. Bei derartigen Lagegebern kann die Feinlage nicht anhand eines einzelnen Rohsignals ermittelt werden. Es ist vielmehr erforderlich, zeitlich nacheinander mehrere Rohsignale zu erfassen bzw. die zugehörigen Ursprungssignale zu erfassen und die Rohsignale aus den Ursprungssignalen abzuleiten. Die ermittelte Feinlage wird daher im Stand der Technik für einen Zeitpunkt ermittelt, der zwischen dem jeweils letzten Erfassungszeitpunkt und dem frühesten der jeweiligen weiteren Erfassungszeitpunkte liegt, meist in etwa in der Mitte zwischen diesen beiden Erfassungszeitpunkten. Genau genommen ist die jeweilige Feinlage, die an die übergeordnete Einrichtung übermittelt wird, daher bereits veraltet. In vielen Fällen ist dies unkritisch. In manchen Fällen - insbesondere bei hochdynamischen Lageregelungen wie beispielsweise hochdynamischen Motion Control-Anwendungen - ist dies jedoch nicht hinnehmbar.

Die Aufgabe der vorliegenden Erfindung besteht darin, Möglichkeiten zu schaffen, mittels derer der Zeitversatz zwischen demjenigen Zeitpunkt, auf welchen die ermittelte Feinlage bezogen ist, und dem Ausgabezeitpunkt minimiert oder zumindest reduziert werden kann.

Die Aufgabe wird durch ein Ermittlungsverfahren mit den Merkmalen des Anspruchs 1 gelöst. Vorteilhafte Ausgestaltungen des erfindungsgemäßen Ermittlungsverfahrens sind Gegenstand der abhängigen Ansprüche 2 bis 8.

Erfindungsgemäß wird ein Ermittlungsverfahren der eingangs genannten Art dadurch ausgestaltet, dass die Auswertungseinrichtung die jeweilige Feinlage auf den jeweils letzten Erfassungszeitpunkt, den jeweiligen Ausgabezeitpunkt oder auf einen zwischen dem jeweils letzten Erfassungszeitpunkt und dem jeweiligen Ausgabezeitpunkt liegenden Ermittlungszeitpunkt extrapoliert.

In einer bevorzugten Ausgestaltung des Ermittlungsverfahrens weist der jeweils letzte Erfassungszeitpunkt einen vorbestimmten ersten Phasenbezug zu einem Nulldurchgang des mindestens einen Anregungssignals auf. Der Phasenbezug kann beispielsweise darin bestehen, dass der letzte Erfassungszeitpunkt mit einem Nulldurchgang mit positiver oder negativer Steigung, einem Minimum oder einem Maximum des Anregungssignals zusammenfällt. Es sind jedoch auch andere erste Phasenbezüge möglich. Weiterhin weisen die jeweiligen weiteren Erfassungszeitpunkte einen jeweiligen vorbestimmten weiteren Phasenbezug zu dem Nulldurchgang des mindestens einen Anregungssignals auf, wobei die jeweiligen vorbestimmten weiteren Phasenbezüge voneinander und vom ersten Phasenbezug verschieden sind.

In einer einfachen Ausgestaltung realisiert die Auswertungseinrichtung die Extrapolation dadurch, dass sie die jeweilige Feinlage unter zusätzlicher Verwendung einer Geschwindigkeit ermittelt, mit welcher der Phasenversatz des Rohsignals relativ zu dem mindestens einen Anregungssignal sich ändert.

Die Anzahl an jeweiligen weiteren Erfassungszeitpunkten kann nach Bedarf bestimmt sein. Beispielsweise kann sie zwei oder drei betragen. Es ist jedoch ausreichend, wenn die Anzahl an jeweiligen weiteren Erfassungszeitpunkten eins beträgt. In diesem Fall werden zur Ermittlung des jeweiligen Phasenversatzes und damit der jeweiligen Feinlage die Rohsignale von exakt zwei Erfassungszeitpunkten verwertet, nämlich die Rohsignale des jeweils letzten Erfassungszeitpunkts und des jeweiligen einzigen weiteren Erfassungszeitpunkts.

Falls der letzte Erfassungszeitpunkt mit einem Nulldurchgang (mit positiver oder negativer Steigung) zusammenfällt, kann der weitere Erfassungszeitpunkt insbesondere mit einem Minimum oder einem Maximum des Anregungssignals zusammenfallen. Falls der letzte Erfassungszeitpunkt mit einem Minimum oder einem Maximum des Anregungssignals zusammenfällt, kann der weitere Erfassungszeitpunkt insbesondere mit einem Nulldurchgang mit positiver oder negativer Steigung zusammenfallen. Es sind jedoch auch ein anderer weiterer Phasenbezug möglich. Ähnliches gilt, wenn mehrere weitere Erfassungszeitpunkte herangezogen werden.

Alternativ zur Verwendung einer Geschwindigkeit, mit welcher der Phasenversatz des Rohsignals relativ zu dem mindestens einen Anregungssignal sich ändert, ist es möglich, dass der jeweils letzte Erfassungszeitpunkt und die jeweiligen weiteren Erfassungszeitpunkte mit mehreren Perioden des mindestens einen Anregungssignals korrespondieren. In diesem Fall realisiert die Auswertungseinrichtung die Extrapolation dadurch, dass sie für die entsprechenden Perioden des mindestens einen Anregungssignals unter Verwendung der innerhalb der entsprechenden Periode erfassten oder abgeleiteten jeweiligen Rohsignale jeweils mindestens ein jeweiliges Zwischensignal ermittelt und die jeweilige Feinlage anhand der jeweiligen Zwischensignale ermittelt.

Es ist möglich, dass die Auswertungseinrichtung als jeweiliges Zwischensignal eine auf die jeweilige Periode bezogene Feinlage des Rohsignals relativ zu dem mindestens einen Anregungssignal ermittelt. Alternativ ist es möglich, dass die Auswertungseinrichtung als jeweilige Zwischensignale den Sinus und den Cosinus einer auf die jeweilige Periode bezogenen Feinlage des Rohsignals relativ zu dem mindestens einen Anregungssignal ermittelt.

Oftmals folgen die Ausgabezeitpunkte in einem konstanten zeitlichen Abstand aufeinander, beispielsweise mit einem zeitlichen Abstand von 125 μs oder 62,5 μs (entspricht einem Ausgabetakt von 8 kHz oder 16 kHz). Es sind jedoch - selbstverständlich - auch andere Ausgabetakte möglich. Unabhängig vom konkreten Wert des Ausgabetakts ist es von Vorteil, wenn die Auswertungseinrichtung die Anregungsfrequenz derart einstellt, dass der konstante zeitliche Abstand ein ganzzahliges Vielfaches der Periode der Anregungsfrequenz ist. Wenn - entsprechend obigen Zahlenbeispielen - der Ausgabetakt 8 kHz oder 16 kHz beträgt, kann die Anregungsfrequenz beispielsweise bei 80 kHz oder 128 kHz liegen, also beispielsweise - bezogen auf 8 kHz - beim zehnfachen oder 16-fachen des Ausgabetakts. Es sind jedoch auch andere ganzzahlige Vielfache möglich. Die exakte Einstellung der Anregungsfrequenz kann beispielsweise über eine PLL (phase locked loop) erfolgen. Noch besser ist es, wenn zusätzlich auch die Anregungssignale einen konstanten Phasenbezug zu den Ausgabezeitpunkten aufweisen. Auch dies kann mittels einer PLL oder einer gleichartig wirkenden Schaltung erreicht werden.

Die Aufgabe wird weiterhin durch ein Steuerprogramm mit den Merkmalen des Anspruchs 9 gelöst. Eine vorteilhafte Ausgestaltung des erfindungsgemäßen Steuerprogramms ist Gegenstand des abhängigen Anspruchs 10.

Erfindungsgemäß wird ein Steuerprogramm der eingangs genannten Art dadurch ausgestaltet, dass die Auswertungseinrichtung die jeweilige Feinlage auf den jeweils letzten Erfassungszeitpunkt, den jeweiligen Ausgabezeitpunkt oder auf einen zwischen dem jeweils letzten Erfassungszeitpunkt und dem jeweiligen Ausgabezeitpunkt liegenden Ermittlungszeitpunkt extrapoliert.

Vorzugsweise implementiert die Auswertungseinrichtung aufgrund der Abarbeitung des Maschinencodes auch die vorteilhaften Ausgestaltungen des Ermittlungsverfahrens.

Die Aufgabe wird weiterhin durch eine Auswertungseinrichtung mit den Merkmalen des Anspruchs 11 gelöst. Eine vorteilhafte Ausgestaltung der erfindungsgemäßen Auswertungseinrichtung ist Gegenstand des abhängigen Anspruchs 12.

Erfindungsgemäß wird eine Auswertungseinrichtung der eingangs genannten Art dadurch ausgestaltet, dass die Auswertungseinrichtung die jeweilige Feinlage auf den jeweils letzten Erfassungszeitpunkt, den jeweiligen Ausgabezeitpunkt oder auf einen zwischen dem jeweils letzten Erfassungszeitpunkt und dem jeweiligen Ausgabezeitpunkt liegenden Ermittlungszeitpunkt extrapoliert.

Vorzugsweise ist die Auswertungseinrichtung derart ausgebildet, dass sie auch die vorteilhaften Ausgestaltungen des Ermittlungsverfahrens ausführt.

Die Aufgabe wird weiterhin durch eine Lagegebereinrichtung mit den Merkmalen des Anspruchs 13 gelöst. Erfindungsgemäß ist bei einer Lagegebereinrichtung der eingangs genannten Art die Auswertungseinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          eine Lagegebereinrichtung und eine übergeordnete Einrichtung,
FIG 2 und 3    je ein Zeitdiagramm,
FIG 4          einen Ausschnitt eines Stators eines Lagegebers,
FIG 5          einen Ausschnitt eines Rotors eines Lagegebers,
FIG 6          ein Zeitdiagramm,
FIG 7          ein Ablaufdiagramm,
FIG 8          ein Zeitdiagramm,
FIG 9 bis 11   Ablaufdiagramme,
FIG 12         eine phasenverriegelte Schleife und
FIG 13         eine Auswertungseinrichtung.

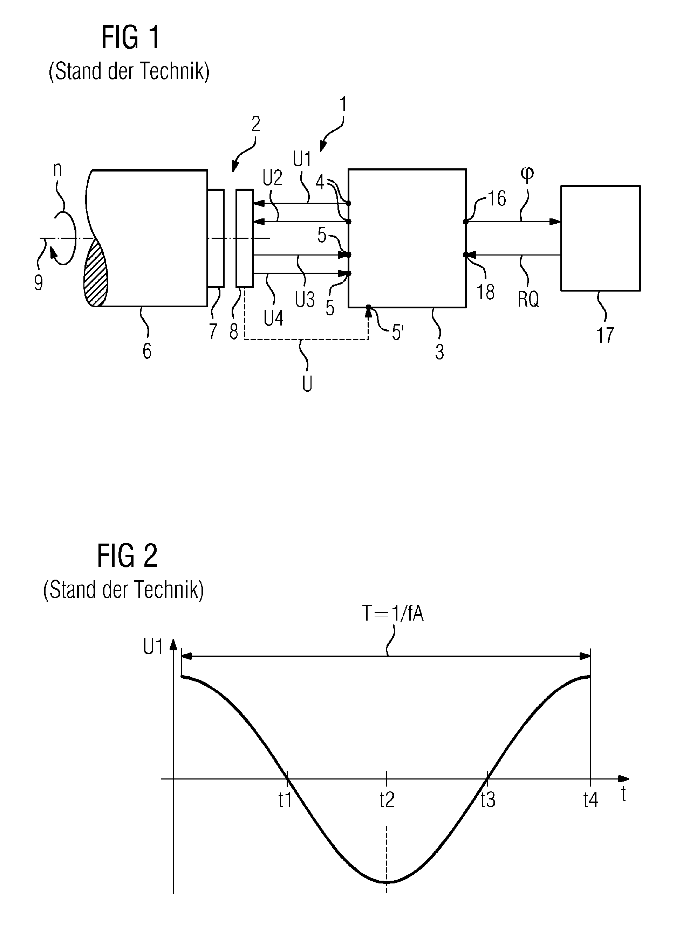

Gemäß FIG 1 weist eine Lagegebereinrichtung 1 einen Lagegeber 2 und eine Auswertungseinrichtung 3 auf.

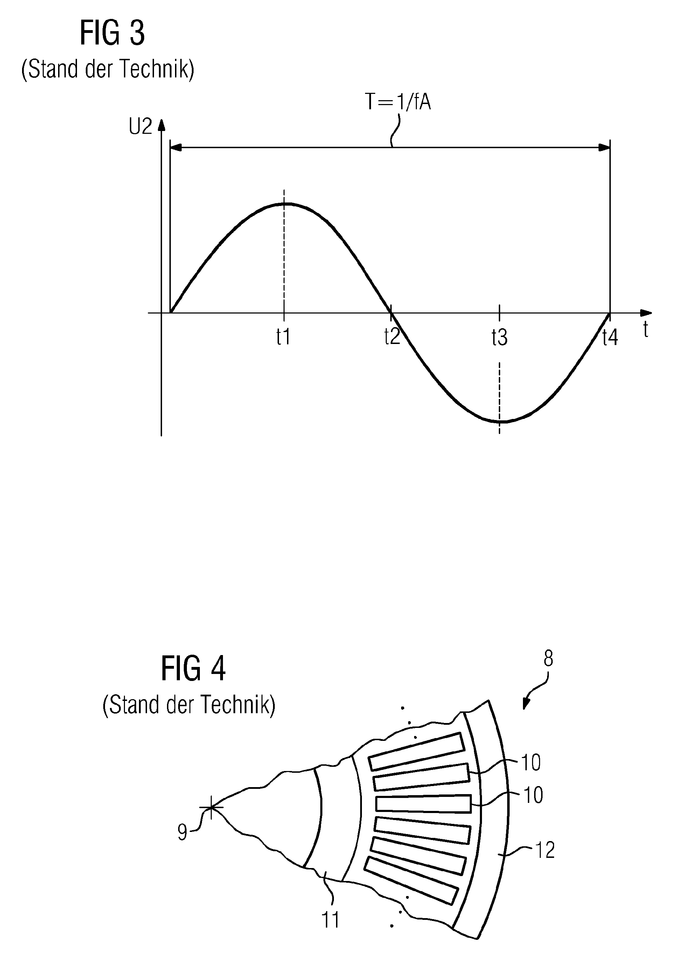

Die Auswertungseinrichtung 3 weist mindestens einen Anregungsausgang 4 auf. Gemäß FIG 1 sind zwei Anregungsausgänge 4 vorhanden. Über die Anregungsausgänge 4 ist die Auswertungseinrichtung 3 mit dem Lagegeber 2 verbunden. Insbesondere führt die Auswertungseinrichtung 3 über die Anregungsausgänge 4 dem Lagegeber 2 ein jeweiliges Anregungssignal U1, U2 zu. Die beiden Anregungssignale U1, U2 weisen gemäß den FIG 2 und 3 eine - für beide Anregungssignale U1, U2 einheitliche, ansonsten aber innerhalb sinnvoller Grenzen prinzipiell frei wählbare - Anregungsfrequenz fA und eine hiermit korrespondierende Periode T = 1/fA auf. Bei den Anregungssignalen U1, U2 kann es sich beispielsweise um Rechtecksignale oder eventuell auch um dreieckige Signale handeln. Die Anregungssignale U1, U2 sind untereinander gleichartig, weisen jedoch einen Phasenversatz relativ zueinander auf. Beispielsweise können für die beiden Anregungssignale U1, U2 im Falle sinusförmiger Anregungssignale U1, U2 die Beziehungen

$$U1 = U0 \cos \omega t \qquad\qquad (1)$$

$$U2 = U0 \sin \omega t \qquad\qquad (2)$$

gelten, wobei U0 eine Amplitude, $\omega$ die mit der Anregungsfrequenz fA korrespondierende Kreisfrequenz (d.h. $\omega$ = 2nfA) und t die Zeit sind. Bei den Anregungssignalen U1, U2 kann es sich insbesondere um elektrische Signale handeln. Die FIG 2 und 3 zeigen jeweils eine periode der beiden Anregungssignale U1, U2.

Die Auswertungseinrichtung 3 weist weiterhin zwei Ursprungssignaleingänge 5 auf, über welche die Auswertungseinrichtung 3 ebenfalls mit dem Lagegeber 2 verbunden ist. Über die Ursprungssignaleingänge 5 nimmt die Auswertungseinrichtung 3 von dem Lagegeber 2 Ursprungssignale U3, U4 entgegen. Aus den zu einem bestimmten Zeitpunkt entgegengenommenen Ursprungssignalen U3, U4 leitet die Auswertungseinrichtung 3 ein Rohsignal U ab. Hierauf wird später noch näher eingegangen werden.

Je nach Technologie des Lagegebers 2 könnte alternativ zu den Ursprungssignaleingängen 5 ein (einziger) Rohsignaleingang 5' vorhanden sein, über den die Auswertungseinrichtung 3 mit dem Lagegeber 2 verbunden wäre. Dies ist in FIG 1 gestrichelt angedeutet. In diesem Fall nähme die Auswertungseinrichtung 3 von dem Lagegeber 2 über den Rohsignaleingang 5' direkt das Rohsignal U entgegen. Beispielsweise könnte eine entsprechende Schaltung zur Ermittlung des Rohsignals U aus den Ursprungssignalen U3, U4 bereits in den Lagegeber 2 integriert sein. In analoger Weise könnte ein Signalteiler mit einem nachgeordneten Phasenschieber zur Generierung des zweiten Anregungssignals U2 aus dem ersten Anregungssignal U1 in den Lagegeber 2 integriert sein. In diesem Fall müsste dem Lagegeber 2 nur das erste Anregungssignal U1 zugeführt werden.

Mittels des Lagegebers 2 und der Auswertungseinrichtung 3 kann in an sich bekannter Weise eine Lage eines rotierenden Maschinenelements 6 - beispielsweise einer Motorwelle - erfasst werden. Zu diesem Zweck weist der Lagegeber 2 einen rotierenden Teil 7 und einen feststehenden Teil 8 auf, nachfolgend als Rotor 7 und als Stator 8 bezeichnet.

Der Rotor 7 ist drehfest mit dem Maschinenelement 6 verbunden und rotiert zusammen mit dem Maschinenelement 6 um eine Rotationsachse 9. Soweit nachfolgend die Begriffe axial, radial und tangential verwendet werden, sind sie stets auf die Rotationsachse 9 bezogen. Axial ist eine Richtung parallel zur Rotationsachse 9. Radial ist eine Richtung orthogonal zur Rotationsachse 9 auf die Rotationsachse 9 zu bzw. von ihr weg. Tangential ist eine Richtung, die bei konstanter Axialposition und in konstantem Radialabstand von der Rotationsachse 9 kreisförmig um die Rotationsachse 9 herum gerichtet ist.

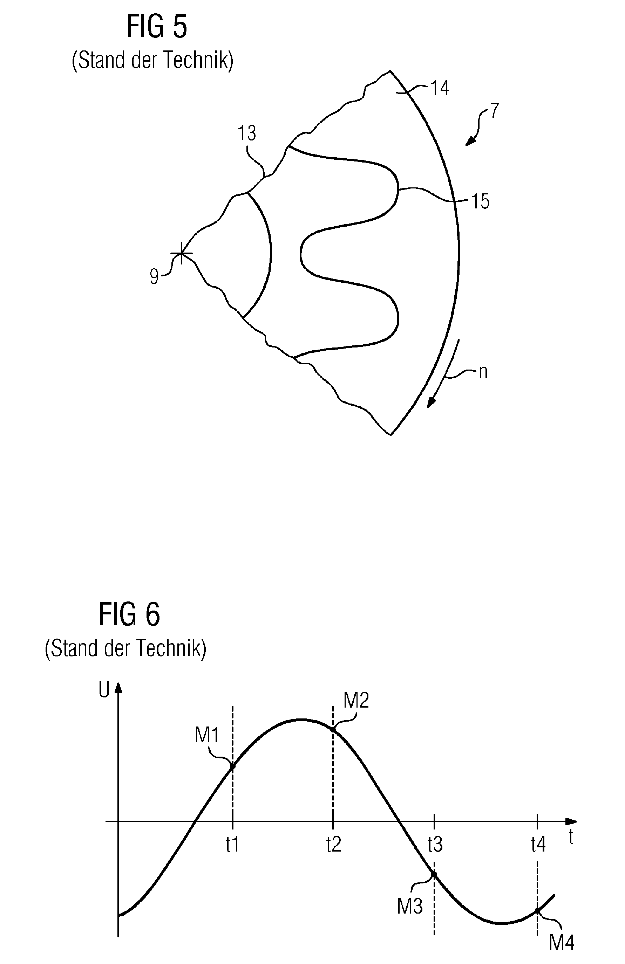

Die mittels des Lagegebers 2 und der Auswertungseinrichtung 3 ermittelbare Lage kann weiterhin in eine sogenannte Groblage und eine sogenannte Feinlage $\varphi$ aufgeteilt werden. Insbesondere variiert die Feinlage $\varphi$ pro vollständiger Umdrehung des Rotors 7 nicht nur einmal zwischen 0 und 2n, sondern Q-mal zwischen 0 und 2n. Q ist hierbei eine ganze Zahl, die größer als 1 ist. Dies wird nachfolgend in Verbindung mit den FIG 4 und 5 anhand einer beispielhaften Ausgestaltung des Lagegebers 2, bei welcher der Lagegeber 2 - analog zur EP 2 527 796 A2 - als sogenannter kapazitiver Geber ausgebildet ist, näher erläutert.

Gemäß FIG 4 ist der Stator 8 konzentrisch zur Rotationsachse 9 angeordnet. Er weist in einem radial mittleren Bereich eine Anzahl von Feldern 10 auf. Die Felder 10 werden sequenziell entsprechend ihrer Reihenfolge in Tangentialrichtung mit dem einen Anregungssignal U1, dem anderen Anregungssignal U2, dem Inversen des einen Anregungssignals U1 und dem Inversen des anderen Anregungssignals U2 beaufschlagt. Radial innerhalb der Felder 10, also zwischen den Feldern 10 und der Rotationsachse 9, ist ein erster Erfassungsbereich 11 angeordnet. Im ersten Erfassungsbereich wird das erste Ursprungssignal U3 erfasst. Radial außerhalb der Felder 10 ist ein zweiter Erfassungsbereich 12 angeordnet. Im zweiten Erfassungsbereich 12 wird das zweite Ursprungssignal U4 erfasst.

Der Rotor 7 weist gemäß FIG 5 zwei leitende Bereiche 13, 14 auf, die durch einen isolierenden Bereich 15 voneinander getrennt sind. Der Bereich 13 überdeckt zumindest teilweise den Radialbereich, in dem der erste Erfassungsbereich 11 angeordnet ist, und zumindest teilweise den Radialbereich, in dem die Felder 10 angeordnet sind. In analoger Weise überdeckt der Bereich 14 zumindest teilweise den Radialbereich, in dem der zweite Erfassungsbereich 12 angeordnet ist, und zumindest teilweise den Radialbereich, in dem die Felder 10 angeordnet sind. Eine (örtliche) Oszillationsfrequenz, mit welcher der isolierende Bereich 15 in Tangentialrichtung gesehen seinen Radialabstand von der Rotationsachse 9 ändert, korrespondiert vorzugsweise mit der örtlichen Oszillationsfrequenz, mit welcher den Feldern 10 das jeweilige Signal U1, U2, -U1, -U2 zugeführt wird.

Wenn man die beiden Ursprungssignale U3, U4 voneinander subtrahiert, gehorcht das resultierende Rohsignal U der Beziehung

$$U = U3 - U4 = A\cos(\omega t - \varphi) = A(\cos\omega t \cos\varphi + \sin\omega t \sin\varphi) \qquad (3)$$

A ist eine von verschiedenen Umständen abhängige Amplitude des Rohsignals U. $\varphi$ entspricht der Feinlage, die innerhalb eines geometrischen Winkelbereichs $\alpha$ (siehe FIG 4) einmal zwischen 0 und 2n variiert. Der Winkelbereich $\alpha$ entspricht, wenn man ihn mit Q multipliziert, entsprechend Gleichung 4 einem Vollkreis:

$$Q \cdot \alpha = 2\pi \qquad (4)$$

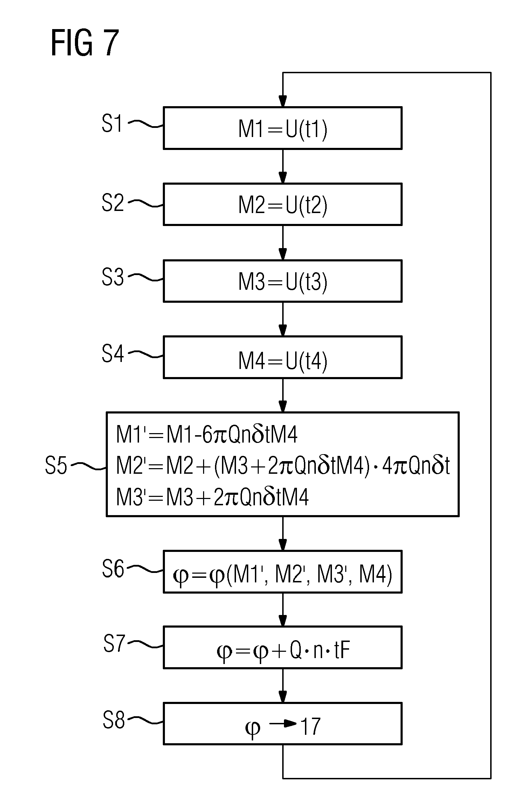

Auch das Rohsignal U oszilliert also mit der Anregungsfrequenz fA. Das Rohsignal U weist jedoch gegenüber dem ersten Anregungssignal U1 einen (zeitlichen) Phasenversatz $\varphi$ auf, der zugleich auch mit der (örtlichen) Feinlage $\varphi$ korrespondiert. FIG 6 zeigt für eine - prinzipiell beliebige - Feinlage $\varphi$ den zeitlichen Verlauf des Rohsignals U.
Nachfolgend wird in Verbindung mit den FIG 6 und 7 eine erste mögliche Ausgestaltung der vorliegenden Erfindung erläutert.
Gemäß den FIG 6 und 7 erfasst die Auswertungseinrichtung 3 in Schritten S1 bis S4 zu Erfassungszeitpunkten t1 bis t4 jeweils das Rohsignal U (genauer: erfasst die Ursprungssignale U3, U4 und leitet daraus das jeweilige Rohsignal U ab). Die Erfassungszeitpunkte t1 bis t4 bilden gemäß FIG 6 eine zeitliche Sequenz. Insbesondere weisen die Erfassungszeitpunkte t1 bis t4 zu einem Nulldurchgang des ersten Anregungssignals U1 einen jeweiligen vorbestimmten Phasenbezug auf. Beispielsweise kann der letzte Erfassungszeitpunkt t4 mit einem Zeitpunkt korrespondieren, zu welchem das erste Anregungssignal U1 sein Maximum aufweist. In analoger Weise können die weiteren Erfassungszeitpunkte t1 bis t3 entsprechend der Darstellung in FIG 6 mit Zeitpunkten korrespondieren, zu welchen das erste Anregungssignal U1 seinen Nulldurchgang mit einem Vorzeichenwechsel von plus zu minus, sein Minimum und seinen Nulldurchgang mit einem Vorzeichenwechsel von minus zu plus aufweist. Die entsprechenden Rohsignale U(t1) bis U(t4) werden nachfolgend kurz als Signale M1 bis M4 bezeichnet.
Unter Anwendung des Additionstheorems für den Cosinus (siehe auch Gleichung 3) ergibt sich

$$M1 = -A\sin\varphi \qquad (5)$$

$$M2 = -A\cos\varphi \qquad (6)$$

$$M3 = A\sin\varphi \qquad (7)$$

$$M4 = A\cos\varphi \qquad (8)$$

Durch Bildung des Arcustangens (selbstverständlich unter Beachtung der singulären Fälle und der Vorzeichen von sin$\varphi$ und cos$\varphi$) kann daher prinzipiell die Feinlage $\varphi$ ermittelt werden.
Genau genommen ist diese Vorgehensweise jedoch nur dann korrekt, wenn der Rotor 7 sich im Zeitraum zwischen dem ersten Erfassungszeitpunkt t1 und dem letzten Erfassungszeitpunkt t4 nicht bewegt. Wenn der Rotor 7 sich bewegt, entspricht die ermittelte Feinlage $\varphi$ in etwa einer mittleren Feinlage, die der Rotor 7 zu einem mittleren Zeitpunkt (tl+t2+t3+t4)/4 innehat. Würde diese Vorgehensweise ergriffen werden, wäre die ermittelte Feinlage $\varphi$ also auf diesen mittleren Zeitpunkt bezogen. Sie wäre also zum Ermittlungszeitpunkt, der frühestens beim letzten Erfassungszeitpunkt t4 liegen kann, bereits veraltet.

Erfindungsgemäß verwertet die Auswertungseinrichtung 3 daher im Rahmen der ersten erfindungsgemäßen Ausgestaltung zusätzlich eine Drehzahl n, mit welcher der Rotor 7 rotiert (siehe FIG 1 und 5). Die Drehzahl n kann der Auswertungseinrichtung 3 beispielsweise von außen zugeführt werden oder der Auswertungseinrichtung 3 aufgrund von früheren Auswertungen bekannt sein.

Nachfolgend wird - zur Vereinfachung, aber ohne Beschränkung der Allgemeinheit - angenommen, dass der zeitliche Nullpunkt mit dem Erfassungszeitpunkt t4 zusammenfällt.

Wenn in einem derartigen Fall der Rotor 7 mit der Drehzahl n rotiert und die Feinlage $\varphi$ für den Zeitpunkt t4 ermittelt werden soll, gilt für das zum letzten Erfassungszeitpunkt t4 erfasste Signal M4 nach wie vor Gleichung 8, also die Beziehung

$$M4 = A\cos\varphi \qquad\qquad (9)$$

Für das zum nächstfrüheren Erfassungszeitpunkt t3 erfasste Signal M3 gilt

$$M3 = A\sin(\varphi - 2\pi Q n \delta t) \qquad\qquad (10)$$

Q ist in Gleichung 10 die Anzahl an Perioden pro vollständiger Umdrehung des Rotors 7, siehe Gleichung 4. $\delta t$ ist die Zeitspanne zwischen zwei unmittelbar aufeinanderfolgenden Erfassungszeitpunkten t1 bis t4. Aufgrund der Wahl der Erfassungszeitpunkte t1 bis t4 gilt weiterhin

$$4\delta t = T = \frac{1}{fA} \qquad\qquad (11)$$

Gleichung 10 kann unter Anwendung des Additionstheorems für den Sinus und unter der Annahme, dass $2\pi Q n \delta t$ klein gegenüber 1 ist, in

$$M3 = A\sin\varphi - 2\pi Q n \delta t \cdot M4 \qquad\qquad (12)$$

umgeformt werden. Damit ergibt sich ein modifiziertes Signal M3' zu

$$M3' = M3 + 2\pi Q n \delta t \cdot M4 = A\sin\varphi \qquad\qquad (13)$$

In ähnlicher Weise lassen sich auch modifizierte Signale M1' und M2' gemäß den Beziehungen

$$M2' = M2 + (M3 + M4 \cdot 2\pi Q n \delta t) \cdot 4\pi Q n \delta t = -A\cos\varphi \qquad\qquad (14)$$

$$M1' = M1 - M4 \cdot 6\pi Q n \delta t = -A \sin \varphi \qquad (15)$$

ermitteln.

Die Annahme, dass 2nQnδt klein gegenüber 1 ist, ist in aller Regel zulässig. Wenn beispielsweise die Anregungsfrequenz fA 100 kHz beträgt, Q den Wert 20 aufweist und die Drehzahl n den - relativ hohen - Wert von 100 Umdrehungen/s aufweist, ergibt sich der Faktor 2nQnδt zu

$$2\pi Q n \delta t = 2\pi \cdot 20 \cdot \frac{100}{s} \cdot 2,5 \mu s \approx 0,063 \qquad (16)$$

Die entsprechenden, obenstehend erläuterten Ermittlungen nimmt die Auswertungseinrichtung 3 in einem Schritt S5 vor. In den Gleichungen 12 bis 15 ist die Feinlage φ auf den letzten Erfassungszeitpunkt t4 bezogen. Unter Verwendung des unmodifizierten Signals M4 und der modifizierten Signale M1' bis M3' kann die Auswertungseinrichtung 3 daher in einem Schritt S6 die Feinlage φ durch Bildung des Arcustangens (wie zuvor selbstverständlich unter Beachtung der singulären Fälle und der Vorzeichen von sinφ und cosφ) ermitteln. Hierbei ist jedoch die Feinlage φ auf den letzten Erfassungszeitpunkt t4 extrapoliert.

Wie bereits erwähnt, kann die Drehzahl n der Auswertungseinrichtung 3 von außen zugeführt werden oder aufgrund von früheren Auswertungen bekannt sein. Genau genommen ist es sogar möglich, die Drehzahl n (und damit die Geschwindigkeit, mit welcher der Phasenversatz φ des Rohsignals U relativ zu dem ersten Anregungssignal U1 sich ändert) anhand der erfassten Signale M1 bis M4 selbst zu ermitteln. Denn die Summe des unmodifizierten Signals M4 und des modifizierten Signals M2' muss - bei rauschfreien und auch ansonsten fehlerfreien Signalen - exakt 0 ergeben. In analoger Weise muss die Summe der modifizierten Signale M1' und M3' den Wert 0 ergeben. Diese Bedingungen können - mit den Näherungen oder ohne die Näherungen der Gleichungen 12 bis 15 - dazu verwendet werden, die Drehzahl n zu ermitteln. Wenn beispielsweise das unmodifizierte Signal M4 und das modifizierte Signal M2' relativ große absolute Werte aufweisen, kann die Drehzahl n von der Auswertungseinrichtung 3 so bestimmt werden, dass die modifizierten Signale M1' und M3' sich gegenseitig exakt kompensieren.

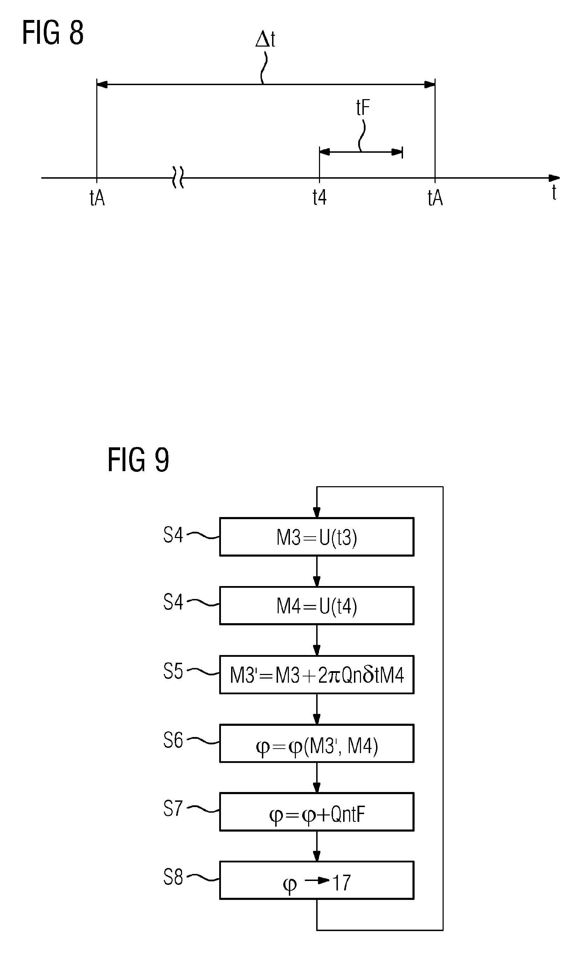

In einem Schritt S8 übermittelt die Auswertungseinrichtung 3 die ermittelte Feinlage φ über einen Lagesignalausgang 16 - siehe auch FIG 1 - an eine übergeordnete Einrichtung 17. Die übergeordnete Einrichtung 17 kann beispielsweise eine Steuereinrichtung sein, welche eine Lage- oder Drehzahlregelung des Maschinenelements 6 durchführt. Die Übermittlung erfolgt gemäß FIG 8 zu einem jeweiligen Ausgabezeitpunkt tA.

Ausgehend vom Schritt S8 geht die Auswertungseinrichtung 3 zum Schritt S1 zurück. Die Auswertungseinrichtung 3 führt die Vorgehensweise der Schritte S1 bis S8 also wiederholt aus.

Es ist möglich, dass zwischen dem letzten Erfassungszeitpunkt t4 und dem Ausgabezeitpunkt tA nur eine vernachlässigbar kleine Zeit vergeht. Falls zwischen dem letzten Erfassungszeitpunkt t4 und dem Ausgabezeitpunkt tA eine größere Zeitspanne liegt, kann die Vorgehensweise von FIG 7 durch einen zusätzlichen Schritt S7 ergänzt sein. Im Schritt S7 wird in diesem Fall unter Berücksichtigung der Drehzahl n eine zusätzliche Extrapolation der Feinlage φ vorgenommen. Diese Extrapolation geht aus von der im Schritt S6 ermittelten Feinlage φ und schreibt die Feinlage φ unter Berücksichtigung der Drehzahl n, des Faktors Q und einer Fortschreibungszeit tF fort. Die Fortschreibungszeit tF ist in diesem Fall entsprechend der Darstellung in FIG 8 größer als 0 und maximal so groß wie die Differenz zwischen dem Ausgabezeitpunkt tA und dem letzten Erfassungszeitpunkt t4.

FIG 9 zeigt eine Modifikation der Vorgehensweise von FIG 7. Gemäß FIG 9 wird nur zu zwei Erfassungszeitpunkten - vorzugsweise zu den Zeitpunkten t3 und t4 - jeweils ein Rohsignal U erfasst. Bei der Vorgehensweise von FIG 9 entfallen also die Schritte S1 und S2. Hiermit korrespondierend sind die Schritte S5 und S6 entsprechend modifiziert. Das Prinzip ist jedoch das gleiche.

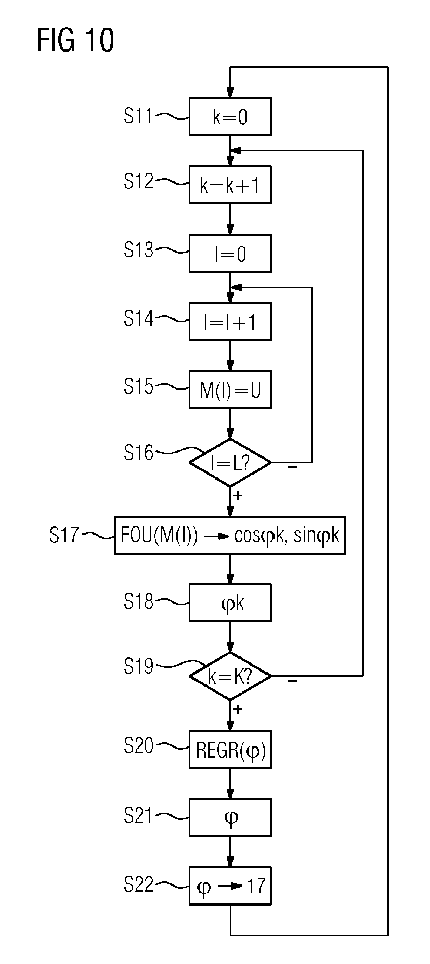

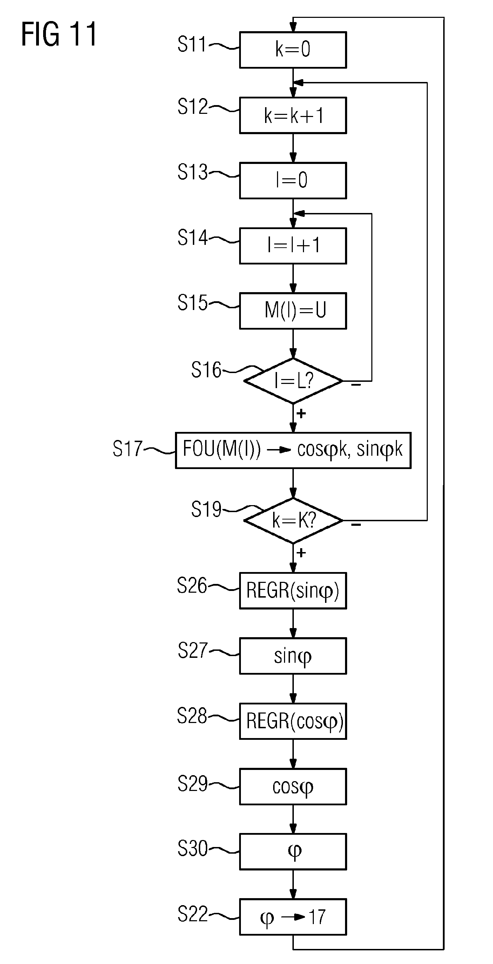

Nachfolgend wird in Verbindung mit den FIG 10 und 11 ein weiteres Ermittlungsverfahren erläutert, gemäß dem die Auswertungseinrichtung 3 die Feinlage φ ermitteln kann.

Gemäß FIG 10 setzt die Auswertungseinrichtung 3 in einem Schritt S11 einen Index k auf den Wert 0. In einem Schritt S12 erhöht die Auswertungseinrichtung 3 den Index k um 1. In einem Schritt S13 setzt die Auswertungseinrichtung 3 einen Index l auf den Wert 0. In einem Schritt S14 erhöht die Auswertungseinrichtung 3 den Index l um 1.

In einem Schritt S15 erfasst die Auswertungseinrichtung 3 ein Rohsignal U. In einem Schritt S16 prüft die Auswertungseinrichtung 3, ob der Index l einen Endwert L erreicht hat. Wenn dies nicht der Fall ist, geht die Auswertungseinrichtung 3 zum Schritt S14 zurück. Anderenfalls geht die Auswertungseinrichtung 3 zu einem Schritt S17 über.

Die im Rahmen der wiederholten Abarbeitung des Schrittes S15 erfassten Rohsignale U bzw. aus den Ursprungssignalen U3, U4 abgeleiteten Rohsignale U korrespondieren mit einer Periode des ersten Anregungssignals U1. Die zugehörigen Erfassungszeitpunkte t(0,1) weisen relativ zu einem Nulldurchgang des ersten Anregungssignals U1 jeweils einen vorbestimmten Phasenbezug auf. Die Auswertungseinrichtung 3 kann daher im Schritt S17 beispielsweise eine Fouriertransformation vornehmen und dadurch die Werte $\sin\varphi 0$ und $\cos\varphi 0$ ermitteln. Anhand der Werte Werte $\sin\varphi 0$ und $\cos\varphi 0$ kann die Auswertungseinrichtung 3 weiterhin in einem Schritt S18 durch Bildung des Arcustangens (selbstverständlich unter Beachtung der singulären Fälle und der Vorzeichen von $\sin\varphi 0$ und $\cos\varphi 0$) für die entsprechende Periode des ersten Anregungssignals U1 die gegebene Feinlage $\varphi 0$ ermitteln. Sowohl die Werte $\sin\varphi 0$ und $\cos\varphi 0$ als auch die entsprechende Feinlage $\varphi 0$ entsprechen Zwischensignalen im Sinne der vorliegenden Erfindung.

In einem Schritt S19 prüft die Auswertungseinrichtung 3, ob der Index k einen Endwert K erreicht hat. Wenn dies nicht der Fall ist, geht die Auswertungseinrichtung zum Schritt S13 zurück. Anderenfalls geht die Auswertungseinrichtung 3 zu einem Schritt S20 über. Im Ergebnis ermittelt die Auswertungseinrichtung 3 somit im Rahmen der wiederholten Abarbeitung der Schritte S17 und S18 für mehrere aufeinanderfolgende Perioden - nämlich K Perioden - des ersten Anregungssignals U1 jeweils die zugehörigen Werte $\sin\varphi k$ und $\cos\varphi k$ und auch die entsprechende Feinlage $\varphi k$.

Die im Rahmen der wiederholten Abarbeitung der Schrittes S17 und S18 ermittelten Werte $\sin\varphi k$ und $\cos\varphi k$ und Feinlage $\varphi k$ sind - analog zu den obenstehend in Verbindung mit dem ersten Ausführungsbeispiel getroffenen Ausführungen - in etwa auf einen mittleren Zeitpunkt der jeweiligen Periode des ersten Anregungssignals U1 bezogen. Im Schritt S20 ermittelt die Auswertungseinrichtung 3 daher anhand der für die einzelnen Perioden ermittelten Feinlagen $\varphi k$ eine Regressionskurve, beispielsweise eine Regressionsgerade. Anhand der Regressionskurve kann die Auswertungseinrichtung 3 daher in einem Schritt S21 für einen - prinzipiell beliebigen - Zeitpunkt die resultierende Feinlage $\varphi$ ermitteln. Der Zeitpunkt, für den die Auswertungseinrichtung 3 die resultierende Feinlage $\varphi$ ermittelt, kann beispielsweise dem zeitlich letzten Erfassungszeitpunkt t(K,L) oder auch einem zeitlich noch später liegenden Zeitpunkt entsprechen. Maximal sollte er jedoch dem Ausgabezeitpunkt tA entsprechen, zu dem die Auswertungseinrichtung 3 in einem Schritt S22 die ermittelte Feinlage $\varphi$ an die übergeordnete Einrichtung 17 übermittelt.

Auch die Vorgehensweise von FIG 10 wird wiederholt ausgeführt. Vom Schritt S22 geht die Auswertungseinrichtung 3 daher zum Schritt S11 zurück.

FIG 11 zeigt eine Modifikation der Vorgehensweise von FIG 10. Nachstehend werden daher nur die Unterschiede zur Vorgehensweise von FIG 10 erläutert.

Der Unterschied besteht zum einen darin, dass der Schritt S18 nicht vorhanden ist. Im Rahmen der Vorgehensweise von FIG 11 werden daher für die einzelnen Perioden des ersten Anregungssignals U1 zunächst nur die Werte $\sin\varphi k$ und $\cos\varphi k$ ermittelt, nicht aber die Feinlage $\varphi k$.

Zum anderen sind die Schritte S20 und S21 durch Schritte S26 bis S30 ersetzt. Im Schritt S26 ermittelt die Auswertungseinrichtung 3 anhand der für die einzelnen Perioden ermittelten Werte $\sin\varphi k$ eine Regressionskurve, beispielsweise eine Regressionsgerade. Anhand der Regressionskurve kann die Auswertungseinrichtung 3 daher im Schritt S27 für einen - prinzipiell beliebigen - Zeitpunkt einen resultierenden Wert $\sin\varphi$ ermitteln. Der Zeitpunkt, für den die Auswertungseinrichtung 3 den resultierende Wert $\sin\varphi$ ermittelt, kann beispielsweise dem zeitlich letzten Erfassungszeitpunkt t(K,L) oder auch einem zeitlich noch später liegenden Zeitpunkt entsprechen. Maximal sollte er jedoch dem Ausgabezeitpunkt tA entsprechen, zu dem die Auswertungseinrichtung 3 in dem Schritt S22 die ermittelte Feinlage $\varphi$ an die übergeordnete Einrichtung 10 übermittelt.

In analoger Weise ermittelt die Auswertungseinrichtung 3 im Schritt S28 anhand der für die einzelnen Perioden ermittelten Werte $\cos\varphi k$ eine weitere Regressionskurve, beispielsweise eine Regressionsgerade. Anhand der weiteren Regressionskurve kann die Auswertungseinrichtung 3 daher im Schritt S29 für denselben Zeitpunkt wie beim Schritt S27 einen resultierenden Wert $\cos\varphi$ ermitteln.

Im Schritt S30 ermittelt die Auswertungseinrichtung 3 sodann die Feinlage $\varphi$ durch Bildung des Arcustangens (selbstverständlich unter Beachtung der singulären Fälle und der Vorzeichen von $\sin\varphi$ und $\cos\varphi$).

Das Ausgeben der Feinlage $\varphi$ an die übergeordnete Einrichtung 17 erfolgt, wie bereits erwähnt, zu Ausgabezeitpunkten tA. Oftmals weist die Auswertungseinrichtung 3 - siehe FIG 1 - einen Abfrageeingang 18 auf, über welchen der Auswertungseinrichtung 3 jeweils ein Abfragesignal RQ zugeführt wird. In diesem Fall gibt die Auswertungseinrichtung 3 jeweils in Reaktion auf das Abfragesignal RQ die Feinlage $\varphi$ an die übergeordnete Einrichtung 17 aus. Oftmals weisen die Abfragesignale RQ und hiermit korrespondierend die Ausgabezeitpunkte tA gemäß FIG 8 einen konstanten zeitlichen Abstand $\Delta t$ voneinander auf. Die Ausgabezeitpunkte tA folgen also in dem konstanten zeitlichen Abstand $\Delta t$ aufeinander.

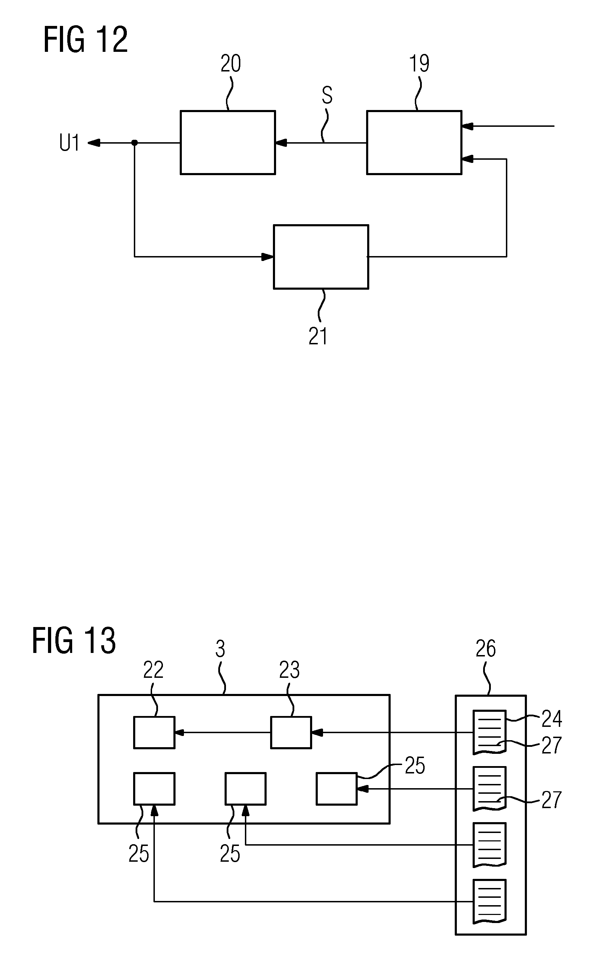

Prinzipiell ist es möglich, dass die Ermittlung der jeweiligen Feinlage $\varphi$ durch die Auswertungseinrichtung 3 und die Übermittlung der Feinlage $\varphi$ an die übergeordnete Einrichtung 17 voneinander entkoppelt sind, also asynchron zueinander erfolgen. Vorzugsweise arbeitet die Auswertungseinrichtung 3 jedoch synchron mit der Abfrage bzw. Ausgabe der Feinlage $\varphi$. Die Auswertungseinrichtung 3 stellt also die Anregungsfrequenz fA derart ein, dass der konstante zeitliche Abstand $\Delta t$ ein ganzzahliges Vielfaches - beispielsweise das achtfache, das zehnfache, das 15-fache oder das 20-fache - der Periode T des ersten Anregungssignals U1 ist. Vorzugsweise weisen zusätzlich auch die Anregungssignale U1, U2 einen konstanten Phasenbezug zu den Ausgabezeitpunkten tA auf. Dies wird nachfolgend in Verbindung mit FIG 12 näher erläutert.

Gemäß FIG 12 weist die Auswertungseinrichtung 3 einen Phasenkomparator 19, einen spannungsgeregelten Oszillator 20 (VCO = voltage controlled oscillator)und einen Frequenzteiler 21 auf. Mittels dieser drei Elemente 19 bis 21 realisiert die Auswertungseinrichtung 3 eine phasenverriegelte Schleife (phase locked loop). Dem Phasenkomparator 19 wird das Abfragesignal RQ bzw. ein hiermit korrespondierendes Frequenzsignal zugeführt. Weiterhin wird dem Phasenkomparator 19 ein Ausgangssignal des Frequenzteilers 21 zugeführt. Der Phasenkomparator 19 prüft, ob die Phasen der beiden ihm zugeführten Signale sich verschieben. Er gibt ein Stellsignal S an den spannungsgeregelten Oszillator 20 aus, aufgrund dessen der spannungsgeregelte Oszillator 20 die Anregungsfrequenz fA nachführt. Ein Ausgangssignal des spannungsgeregelten Oszillators 20 korrespondiert mit dem ersten Anregungssignal U1. Das erste Anregungssignal U1 wird einerseits dem Lagegeber 2 zugeführt, andererseits auf den Frequenzteiler 21 zurückgeführt. Der Frequenzteiler 21 teilt das ihm zugeführte Signal auf eine niedrigere Frequenz. Diese niedrigere Frequenz stimmt im Idealfall mit der Frequenz des Frequenzsignals überein. Eine konstante Phasenlage der Anregungssignale U1, U2 zu den Ausgabezeitpunkten tA stellt sich dadurch ganz von selbst ein.

Die obenstehend in Verbindung mit FIG 12 erläuterte Ausgestaltung stellt eine phasenverriegelte Schleife (PLL = phase locked loop) dar. Ihr Aufbau und ihre Wirkungsweise ist Fachleuten allgemein bekannt. Es sind jedoch auch andere Ausgestaltungen möglich, um die Anregungsfrequenz fA mit dem Abfragesignal RQ zu synchronisieren.

Es ist möglich, dass die Auswertungseinrichtung 3 als Hardwareschaltung ausgebildet ist. Vorzugsweise ist die Auswertungseinrichtung 3 jedoch programmierbar. Die Auswertungseinrichtung 3 kann beispielsweise gemäß FIG 13 einen Prozessor 22 aufweisen, der ein in einem Programmspeicher 23 der Auswertungseinrichtung 3 hinterlegtes Programm 24 sequenziell abgearbeitet. Alternativ oder zusätzlich kann die Programmierbarkeit der Auswertungseinrichtung 3 dadurch realisiert sein, dass die Auswertungseinrichtung 3 programmierbare Logikbausteine 25 aufweist, deren interne Verschaltung durch eine entsprechende Programmierung festgelegt wird. Beispiele derartiger Logikbausteine 25 sind field programmable gate arrays (FPGA) und programmable logic arrays (PLA). Falls die Auswertungseinrichtung 3 programmierbar ist, wird der Auswertungseinrichtung 3 zunächst ein Steuerprogramm 26 zugeführt. Das Steuerprogramm 26 umfasst in diesem Fall Maschinencode 27, der von der Auswertungseinrichtung 3 ausführbar ist. In diesem Fall bewirkt die Ausführung des Maschinencodes 27 durch die Auswertungseinrichtung 3, dass die Auswertungseinrichtung 3 eines der obenstehend erläuterten Ermittlungsverfahren ausführt.

Zusammengefasst betrifft die vorliegende Erfindung somit folgenden Sachverhalt:

Eine Auswertungseinrichtung 3 führt einem Lagegeber 2 mindestens ein Anregungssignal U1 zu, das eine Anregungsfrequenz fA aufweist. Ein vom Lagegeber 2 abgegebenes Rohsignal U oder ein anhand von vom Lagegeber 2 abgegebenen Ursprungssignalen U3, U4 abgeleitetes Rohsignal U oszilliert mit der Anregungsfrequenz fA. Es weist relativ zu dem mindestens einen Anregungssignal U1 einen mit der Feinlage φ korrespondierenden Phasenversatz φ auf. Die Auswertungseinrichtung 3 erfasst wiederholt zu einem jeweils letzten Erfassungszeitpunkt t4, t(K,L) und zu einer Anzahl von jeweiligen weiteren Erfassungszeitpunkten t1 bis t3, t(k,l), die zeitlich vor dem jeweils letzten Erfassungszeitpunkt t4, t(K,L) liegen, jeweils das Rohsignal U oder die Ursprungssignale U3, U4. Die Auswertungseinrichtung 3 ermittelt unter Verwendung der zu den Erfassungszeitpunkten t1 bis t4, t(k,l) erfassten oder abgeleiteten Rohsignale U jeweils die Feinlage φ. Die Auswertungseinrichtung 3 extrapoliert die jeweilige Feinlage φ auf den jeweils letzten Erfassungszeitpunkt t4, t(K,L), einen jeweiligen Ausgabezeitpunkt tA oder auf einen Zeitpunkt zwischen diesen Zeitpunkten tA, t4, t(K,L). Sie gibt die jeweils ermittelte Feinlage φ zu dem jeweiligen Ausgabezeitpunkt tA an eine übergeordnete Einrichtung 17 aus.

Die vorliegende Erfindung weist viele Vorteile auf. Insbesondere ist auf einfache Weise eine im Ergebnis nahezu verzögerungsfreie Ermittlung der Feinlage φ möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ermittlungsverfahren für eine jeweilige Feinlage (φ) eines Lagegebers (2),

   - wobei eine Auswertungseinrichtung (3) dem Lagegeber (2) mindestens ein Anregungssignal (U1) zuführt, das eine Anregungsfrequenz (fA) aufweist,
   - wobei ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der Feinlage (φ) korrespondierenden Phasenversatz (φ) aufweist,

- wobei die Auswertungseinrichtung (3) wiederholt zu einem jeweils letzten Erfassungszeitpunkt (t4, t(K,L)) und zu einer Anzahl von jeweiligen weiteren Erfassungszeitpunkten (t1 bis t3, t(k,l)), die zeitlich vor dem jeweils letzten Erfassungszeitpunkt (t4, t(K,L)) liegen, jeweils das Rohsignal (U) erfasst oder die Ursprungssignale (U3, U4) erfasst und das Rohsignal (U) ableitet,

- wobei die Auswertungseinrichtung (3) unter Verwendung der zu den Erfassungszeitpunkten (t1 bis t4, t(k,l)) erfassten oder abgeleiteten Rohsignale (U) jeweils die Feinlage (φ) ermittelt,

- wobei die Auswertungseinrichtung (3) die jeweils ermittelte Feinlage (φ) zu einem jeweiligen Ausgabezeitpunkt (tA) an eine übergeordnete Einrichtung (17) ausgibt,

**dadurch gekennzeichnet,**

**dass** die Auswertungseinrichtung (3) die jeweilige Feinlage

(φ) auf den jeweils letzten Erfassungszeitpunkt (t4, t(K,L)), den jeweiligen Ausgabezeitpunkt (tA) oder auf einen zwischen dem jeweils letzten Erfassungszeitpunkt (t4, t(K,L)) und dem jeweiligen Ausgabezeitpunkt (tA) liegenden Ermittlungszeitpunkt extrapoliert.

2. Ermittlungsverfahren nach Anspruch 1,
   **dadurch gekennzeichnet,**
   **dass** der jeweils letzte Erfassungszeitpunkt (t4, t(K,L)) einen vorbestimmten ersten Phasenbezug zu einem Nulldurchgang des mindestens einen Anregungssignals (U1) aufweist, dass die jeweiligen weiteren Erfassungszeitpunkte (t1 bis t3, t(k,l)) einen jeweiligen vorbestimmten weiteren Phasenbezug zu dem Nulldurchgang des mindestens einen Anregungssignals (U1) aufweisen und dass die jeweiligen vorbestimmten weiteren Phasenbezüge voneinander und vom ersten Phasenbezug verschieden sind.

3. Ermittlungsverfahren nach Anspruch 2,
   **dadurch gekennzeichnet,**
   **dass** die Auswertungseinrichtung (3) die jeweilige Feinlage (φ) unter zusätzlicher Verwendung einer Geschwindigkeit ermittelt, mit welcher der Phasenversatz (φ) des Rohsignals (U) relativ zu dem mindestens einen Anregungssignal (U1) sich ändert.

4. Ermittlungsverfahren nach Anspruch 3,
   **dadurch gekennzeichnet,**
   **dass** die Anzahl an jeweiligen weiteren Erfassungszeitpunkten (t3) eins beträgt.

5. Ermittlungsverfahren nach Anspruch 2,
   **dadurch gekennzeichnet,**

   - **dass** der jeweils letzte Erfassungszeitpunkt (t4, t(K,L)) und die jeweiligen weiteren Erfassungszeitpunkte (t1 bis t3, t(k,l)) mit mehreren Perioden des mindestens einen Anregungssignals (U1) korrespondieren,
   - **dass** die Auswertungseinrichtung (3) für die entsprechenden Perioden des mindestens einen Anregungssignals (U1) unter Verwendung der innerhalb der entsprechenden Periode erfassten oder abgeleiteten jeweiligen Rohsignale (U) jeweils mindestens ein jeweiliges Zwischensignal ($\sin\varphi k$), $\cos\varphi k$), $\varphi k$) ermittelt und
   - **dass** die Auswertungseinrichtung (3) die jeweilige Feinlage (φ) anhand der jeweiligen Zwischensignale ($\sin\varphi k$), $\cos\varphi k$), $\varphi k$) ermittelt.

6. Ermittlungsverfahren nach Anspruch 5,
   **dadurch gekennzeichnet,**
   **dass** die Auswertungseinrichtung (3) als jeweiliges Zwischensignal ($\varphi k$) eine auf die jeweilige Periode bezogenen Feinlage ($\varphi k$) des Rohsignals (U) relativ zu dem mindestens einen Anregungssignal (U1) ermittelt.

7. Ermittlungsverfahren nach Anspruch 5,
   **dadurch gekennzeichnet,**
   **dass** die Auswertungseinrichtung (3) als jeweilige Zwischensignale ($\sin\varphi k$), $\cos\varphi k$)) den Sinus ($\sin(\varphi k)$) und den Cosinus ($\cos(\varphi k)$) einer auf die jeweilige Periode bezogenen Feinlage ($\varphi k$) des Rohsignals (U) relativ zu dem mindestens einen Anregungssignal (U1) ermittelt.

8. Ermittlungsverfahren nach einem der obigen Ansprüche,

**dadurch gekennzeichnet,**

**dass** die Ausgabezeitpunkte (tA) in einem konstanten zeitlichen Abstand (Δt) aufeinander folgen und dass die Auswertungseinrichtung (3) die Anregungsfrequenz (fA) derart einstellt, dass der konstante zeitliche Abstand (Δt) ein ganzzahliges Vielfaches der Periode (T) der Anregungsfrequenz (fA) ist.

9.   Steuerprogramm für eine Auswertungseinrichtung (3), wobei das Steuerprogramm (26) Maschinencode (27) umfasst, der von der Auswertungseinrichtung (3) ausführbar ist, wobei die Ausführung des Maschinencodes (27) durch die Auswertungseinrichtung (3) bewirkt, dass die Auswertungseinrichtung (3)

- einem Lagegeber (2) mindestens ein Anregungssignal (U1) zuführt, das eine Anregungsfrequenz (fA) aufweist, so dass ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der Feinlage (φ) des Lagegebers (2) korrespondierenden Phasenversatz (φ) aufweist,

- wiederholt zu einem jeweils letzten Erfassungszeitpunkt (t4, t(K,L)) und zu einer Anzahl von jeweiligen weiteren Erfassungszeitpunkten (t1 bis t3, t(k,l)), die zeitlich vor dem jeweils letzten Erfassungszeitpunkt (t4, t(K,L)) liegen, jeweils das Rohsignal (U) erfasst oder die Ursprungssignale (U3, U4) erfasst und das Rohsignal (U) ableitet,

- unter Verwendung der zu den Erfassungszeitpunkten (t1 bis t4, t(k,l)) erfassten oder abgeleiteten Rohsignale (U) jeweils die Feinlage (φ) ermittelt und

- die jeweils ermittelte Feinlage (φ) zu einem jeweiligen Ausgabezeitpunkt (tA) an eine übergeordnete Einrichtung (17) ausgibt,

- wobei die Auswertungseinrichtung (3) die jeweilige Feinlage (φ) auf den jeweils letzten Erfassungszeitpunkt (t4, t(K,L)), den jeweiligen Ausgabezeitpunkt (tA) oder auf einen zwischen dem jeweils letzten Erfassungszeitpunkt (t4, t(K,L)) und dem jeweiligen Ausgabezeitpunkt (tA) liegenden Ermittlungszeitpunkt extrapoliert.

10.   Steuerprogramm nach Anspruch 9,
**dadurch gekennzeichnet,**
**dass** die Ausführung des Maschinencodes (27) durch die Auswertungseinrichtung (3) bewirkt, dass die Auswertungseinrichtung (3) ein Ermittlungsverfahren nach einem der Ansprüche 2 bis 8 ausführt.

11.   Auswertungseinrichtung zum Ermitteln einer jeweiligen Feinlage (φ) eines Lagegebers (2),

- wobei die Auswertungseinrichtung mindestens einen Anregungsausgang (4) aufweist, über den die Auswertungseinrichtung dem Lagegeber (2) ein Anregungssignal (U1) zuführt, das eine Anregungsfrequenz (fA) aufweist,

- wobei ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der jeweiligen Feinlage (φ) korrespondierenden Phasenversatz (φ) aufweist,

- wobei die Auswertungseinrichtung einen Rohsignaleingang (5') aufweist, über den die Auswertungseinrichtung wiederholt zu einem jeweils letzten Erfassungszeitpunkt (t4, t(K,L)) und zu einer Anzahl von jeweiligen weiteren Erfassungszeitpunkten (t1 bis t3, t(k,l)), die zeitlich vor dem jeweils letzten Erfassungszeitpunkt (t4, t(K,L)) liegen, jeweils ein Rohsignal (U) erfasst, oder mehrere Ursprungssignaleingänge (5) aufweist, über die die Auswertungseinrichtung wiederholt zu einem jeweils letzten Erfassungszeitpunkt (t4, t(K,L)) und zu einer Anzahl von jeweiligen weiteren Erfassungszeitpunkten (t1 bis t3, t(k,l)), die zeitlich vor dem jeweils letzten Erfassungszeitpunkt (t4, t(K,L)) liegen, jeweils ein Ursprungssignal (U3, U4) erfasst und aus den jeweils erfassten Ursprungssignalen (U3, U4) jeweils ein Rohsignal (U) ableitet,

- wobei die Auswertungseinrichtung derart ausgebildet ist, dass sie unter Verwendung der zu den jeweiligen Erfassungszeitpunkten (t1 bis t4, t(k,l)) erfassten Rohsignale (U) jeweils die Feinlage (φ) ermittelt,

- wobei die Auswertungseinrichtung einen Lagesignalausgang (16) aufweist, über den die Auswertungseinrichtung die jeweils ermittelte Feinlage (φ) zu einem jeweiligen Ausgabezeitpunkt (tA) an eine übergeordnete Einrichtung (17) ausgibt,

**dadurch gekennzeichnet,**
**dass** die Auswertungseinrichtung (3) die jeweilige Feinlage (φ) auf den jeweils letzten Erfassungszeitpunkt (t4, t(K,L)), den jeweiligen Ausgabezeitpunkt (tA) oder auf einen zwischen dem jeweils letzten Erfassungszeitpunkt (t4, t(K,L)) und dem jeweiligen Ausgabezeitpunkt (tA) liegenden Ermittlungszeitpunkt extrapoliert.

**12.** Auswertungseinrichtung nach Anspruch 11,
**dadurch gekennzeichnet,**
**dass** die Auswertungseinrichtung derart ausgebildet ist, dass sie ein Ermittlungsverfahren nach einem der Ansprüche 2 bis 8 ausführt.

**13.** Lagegebereinrichtung, wobei die Lagegebereinrichtung eine Auswertungseinrichtung (3) nach Anspruch 11 oder 12 und einen Lagegeber (2) aufweist, wobei die Auswertungseinrichtung (3) über ihren mindestens einen Anregungsausgang (4) und über ihren Rohsignaleingang (5') oder ihre Ursprungssignaleingänge (5) mit dem Lagegeber (2) verbunden ist und über ihren Lagesignalausgang (16) mit einer übergeordneten Einrichtung (17) verbindbar ist.

**Geänderte Patentansprüche gemäss Regel 137(2) EPÜ.**

**1.** Ermittlungsverfahren für eine jeweilige Feinlage ($\varphi$) eines Lagegebers (2),

- wobei eine Auswertungseinrichtung (3) dem Lagegeber (2) mindestens ein Anregungssignal (U1) zuführt, das eine Anregungsfrequenz (fA) aufweist,
- wobei ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der Feinlage ($\varphi$) korrespondierenden Phasenversatz ($\varphi$) aufweist,
- wobei die Auswertungseinrichtung (3) wiederholt zu einem jeweils letzten Erfassungszeitpunkt (t4) und zu einer Anzahl von jeweiligen weiteren Erfassungszeitpunkten (t1 bis t3), die zeitlich vor dem jeweils letzten Erfassungszeitpunkt (t4) liegen, jeweils das Rohsignal (U) erfasst oder die Ursprungssignale (U3, U4) erfasst und das Rohsignal (U) ableitet,
- wobei der jeweils letzte Erfassungszeitpunkt (t4) einen vorbestimmten ersten Phasenbezug zu einem Nulldurchgang des mindestens einen Anregungssignals (U1) aufweist,
- wobei die jeweiligen weiteren Erfassungszeitpunkte (t1 bis t3) einen jeweiligen vorbestimmten weiteren Phasenbezug zu dem Nulldurchgang des mindestens einen Anregungssignals (U1) aufweisen,
- wobei die jeweiligen vorbestimmten weiteren Phasenbezüge voneinander und vom ersten Phasenbezug verschieden sind,
- wobei die Auswertungseinrichtung (3) die zu den jeweiligen weiteren Erfassungszeitpunkten (t1 bis t3) erfassten oder abgeleiteten Rohsignale (U) unter Verwendung einer Geschwindigkeit, mit welcher der Phasenversatz ($\varphi$) des Rohsignals (U) relativ zu dem mindestens einen Anregungssignal (U1) sich ändert, auf den jeweils letzten Erfassungszeitpunkt (t4) extrapoliert,
- wobei die Auswertungseinrichtung (3) anhand des zum jeweils letzten Erfassungszeitpunkt (t4) erfassten oder abgeleiteten Rohsignals (U) und der zu den jeweiligen weiteren Erfassungszeitpunkten (t1 bis t3) erfassten oder abgeleiteten, auf den jeweils letzten Erfassungszeitpunkt (t4) extrapolierten Rohsignale (U) jeweils die Feinlage ($\varphi$) ermittelt,
- wobei die Auswertungseinrichtung (3) die jeweils ermittelte Feinlage ($\varphi$) zu einem jeweiligen Ausgabezeitpunkt (tA) an eine übergeordnete Einrichtung (17) ausgibt oder die jeweils ermittelte Feinlage ($\varphi$) auf den jeweiligen Ausgabezeitpunkt (tA) oder auf einen zwischen dem jeweils letzten Erfassungszeitpunkt (t4) und dem jeweiligen Ausgabezeitpunkt (tA) liegenden Ermittlungszeitpunkt extrapoliert und zum jeweiligen Ausgabezeitpunkt (tA) an die übergeordnete Einrichtung (17) ausgibt.

**2.** Ermittlungsverfahren nach Anspruch 1,
**dadurch gekennzeichnet,**
**dass** die Anzahl an jeweiligen weiteren Erfassungszeitpunkten (t3, t1 bis t3) eins oder drei beträgt.

**3.** Ermittlungsverfahren nach Anspruch 1 oder 2,
**dadurch gekennzeichnet,**
**dass** die Ausgabezeitpunkte (tA) in einem konstanten zeitlichen Abstand ($\Delta t$) aufeinander folgen und dass die Auswertungseinrichtung (3) die Anregungsfrequenz (fA) derart einstellt, dass der konstante zeitliche Abstand ($\Delta t$) ein ganzzahliges Vielfaches der Periode (T) der Anregungsfrequenz (fA) ist.

**4.** Steuerprogramm für eine Auswertungseinrichtung (3), wobei das Steuerprogramm (26) Maschinencode (27) umfasst, der von der Auswertungseinrichtung (3) ausführbar ist, wobei die Ausführung des Maschinencodes (27) durch die Auswertungseinrichtung (3) bewirkt, dass die Auswertungseinrichtung (3)

- einem Lagegeber (2) mindestens ein Anregungssignal (U1) zuführt, das eine Anregungsfrequenz (fA) aufweist, so dass ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der Feinlage (φ) des Lagegebers (2) korrespondierenden Phasenversatz (φ) aufweist,

- wiederholt zu einem jeweils letzten Erfassungszeitpunkt (t4), der einen vorbestimmten ersten Phasenbezug zu einem Nulldurchgang des mindestens einen Anregungssignals (U1) aufweist, und zu einer Anzahl von jeweiligen weiteren Erfassungszeitpunkten (t1 bis t3), die zeitlich vor dem jeweils letzten Erfassungszeitpunkt (t4) liegen und einen jeweiligen vorbestimmten weiteren Phasenbezug zu dem Nulldurchgang des mindestens einen Anregungssignals (U1) aufweisen, wobei die jeweiligen vorbestimmten weiteren Phasenbezüge voneinander und vom ersten Phasenbezug verschieden sind, jeweils das Rohsignal (U) erfasst oder die Ursprungssignale (U3, U4) erfasst und das Rohsignal (U) ableitet,

- die zu den jeweiligen weiteren Erfassungszeitpunkten (t1 bis t3) erfassten oder abgeleiteten Rohsignale (U) unter Verwendung einer Geschwindigkeit, mit welcher der Phasenversatz (φ) des Rohsignals (U) relativ zu dem mindestens einen Anregungssignal (U1) sich ändert, auf den jeweils letzten Erfassungszeitpunkt (t4) extrapoliert,

- anhand des zum jeweils letzten Erfassungszeitpunkt (t4) erfassten oder abgeleiteten Rohsignals (U) und der zu den jeweiligen weiteren Erfassungszeitpunkten (t1 bis t3) erfassten oder abgeleiteten, auf den jeweils letzten Erfassungszeitpunkt (t4) extrapolierten Rohsignale (U) jeweils die Feinlage (φ) ermittelt und

- die jeweils ermittelte Feinlage (φ) zu einem jeweiligen Ausgabezeitpunkt (tA) an eine übergeordnete Einrichtung (17) ausgibt oder die jeweils ermittelte Feinlage (φ) auf den jeweiligen Ausgabezeitpunkt (tA) oder auf einen zwischen dem jeweils letzten Erfassungszeitpunkt (t4) und dem jeweiligen Ausgabezeitpunkt (tA) liegenden Ermittlungszeitpunkt extrapoliert und zum jeweiligen Ausgabezeitpunkt (tA) an die übergeordnete Einrichtung (17) ausgibt.

5. Steuerprogramm nach Anspruch 4,
**dadurch gekennzeichnet,**
**dass** die Ausführung des Maschinencodes (27) durch die Auswertungseinrichtung (3) bewirkt, dass die Auswertungseinrichtung (3) ein Ermittlungsverfahren nach Anspruch 2 oder 3 ausführt.

6. Auswertungseinrichtung zum Ermitteln einer jeweiligen Feinlage (φ) eines Lagegebers (2),

- wobei die Auswertungseinrichtung mindestens einen Anregungsausgang (4) aufweist, über den die Auswertungseinrichtung dem Lagegeber (2) ein Anregungssignal (U1) zuführt, das eine Anregungsfrequenz (fA) aufweist,

- wobei ein vom Lagegeber (2) abgegebenes Rohsignal (U) oder ein anhand von vom Lagegeber (2) abgegebenen Ursprungssignalen (U3, U4) abgeleitetes Rohsignal (U) mit der Anregungsfrequenz (fA) oszilliert und relativ zu dem mindestens einen Anregungssignal (U1) einen mit der jeweiligen Feinlage (φ) korrespondierenden Phasenversatz (φ) aufweist,

- wobei die Auswertungseinrichtung einen Rohsignaleingang (5') aufweist, über den die Auswertungseinrichtung wiederholt zu einem jeweils letzten Erfassungszeitpunkt (t4) und zu einer Anzahl von jeweiligen weiteren Erfassungszeitpunkten (t1 bis t3), die zeitlich vor dem jeweils letzten Erfassungszeitpunkt (t4) liegen, jeweils ein Rohsignal (U) erfasst, oder mehrere Ursprungssignaleingänge (5) aufweist, über die die Aus-wertungseinrichtung wiederholt zu einem jeweils letzten Erfassungszeitpunkt (t4) und zu einer Anzahl von jeweiligen weiteren Erfassungszeitpunkten (t1 bis t3), die zeitlich vor dem jeweils letzten Erfassungszeitpunkt (t4) liegen, jeweils ein Ursprungssignal (U3, U4) erfasst und aus den jeweils erfassten Ursprungssignalen (U3, U4) jeweils ein Rohsignal (U) ableitet,

- wobei der jeweils letzte Erfassungszeitpunkt (t4) einen vorbestimmten ersten Phasenbezug zu einem Nulldurchgang des mindestens einen Anregungssignals (U1) aufweist,

- wobei die jeweiligen weiteren Erfassungszeitpunkte (t1 bis t3) einen jeweiligen vorbestimmten weiteren Phasenbezug zu dem Nulldurchgang des mindestens einen Anregungssignals (U1) aufweisen,

- wobei die jeweiligen vorbestimmten weiteren Phasenbezüge voneinander und vom ersten Phasenbezug verschieden sind,

- wobei die Auswertungseinrichtung (3) die zu den jeweiligen weiteren Erfassungszeitpunkten (t1 bis t3) erfassten oder abgeleiteten Rohsignale (U) unter Verwendung einer Geschwindigkeit, mit welcher der Phasenversatz (φ) des Rohsignals (U) relativ zu dem mindestens einen Anregungssignal (U1) sich ändert, auf den jeweils letzten Erfassungszeitpunkt (t4) extrapoliert,

- wobei die Auswertungseinrichtung derart ausgebildet ist, dass sie anhand des zum jeweils letzten Erfassungszeitpunkt (t4) erfassten oder abgeleiteten Rohsignals (U) und der zu den jeweiligen weiteren Erfassungszeitpunkten (t1 bis t3) erfassten oder abgeleiteten, auf den jeweils letzten Erfassungszeitpunkt (t4) extrapolierten Rohsignale (U) jeweils die Feinlage ($\varphi$) ermittelt,

- wobei die Auswertungseinrichtung einen Lagesignalausgang (16) aufweist, über den die Auswertungseinrichtung die jeweils ermittelte Feinlage ($\varphi$) zu einem jeweiligen Ausgabezeitpunkt (tA) an eine übergeordnete Einrichtung (17) ausgibt oder die jeweils ermittelte Feinlage ($\varphi$) auf den jeweiligen Ausgabezeitpunkt (tA) oder auf einen zwischen dem jeweils letzten Erfassungszeitpunkt (t4) und dem jeweiligen Ausgabezeitpunkt (tA) liegenden Ermittlungszeitpunkt extrapoliert und zum jeweiligen Ausgabezeitpunkt (tA) an die übergeordnete Einrichtung (17) ausgibt.

7.   Auswertungseinrichtung nach Anspruch 6,
     **dadurch gekennzeichnet,**
     **dass** die Auswertungseinrichtung derart ausgebildet ist, dass sie ein Ermittlungsverfahren nach Anspruch 2 oder 3 ausführt.

8.   Lagegebereinrichtung, wobei die Lagegebereinrichtung eine Auswertungseinrichtung (3) nach Anspruch 6 oder 7 und einen Lagegeber (2) aufweist, wobei die Auswertungseinrichtung (3) über ihren mindestens einen Anregungsausgang (4) und über ihren Rohsignaleingang (5') oder ihre Ursprungssignaleingänge (5) mit dem Lagegeber (2) verbunden ist und über ihren Lagesignalausgang (16) mit einer übergeordneten Einrichtung (17) verbindbar ist.

# FIG 1
(Stand der Technik)

# FIG 2
(Stand der Technik)

## FIG 3
(Stand der Technik)

$T = 1/fA$

U2

t1   t2   t3   t4   t

## FIG 4
(Stand der Technik)

8

9

11

10
10
12

## FIG 5
(Stand der Technik)

## FIG 6
(Stand der Technik)

# FIG 7

S1 — $M1 = U(t1)$

S2 — $M2 = U(t2)$

S3 — $M3 = U(t3)$

S4 — $M4 = U(t4)$

S5 —
$M1' = M1 - 6\pi Qn\delta tM4$
$M2' = M2 + (M3 + 2\pi Qn\delta tM4) \cdot 4\pi Qn\delta t$
$M3' = M3 + 2\pi Qn\delta tM4$

S6 — $\varphi = \varphi(M1', M2', M3', M4)$

S7 — $\varphi = \varphi + Q \cdot n \cdot tF$

S8 — $\varphi \longrightarrow 17$

## FIG 8

## FIG 9

| Step | Content |
|------|---------|
| S4 | $M3 = U(t3)$ |
| S4 | $M4 = U(t4)$ |
| S5 | $M3' = M3 + 2\pi Qn\delta tM4$ |
| S6 | $\varphi = \varphi(M3', M4)$ |
| S7 | $\varphi = \varphi + QntF$ |
| S8 | $\varphi \rightarrow 17$ |

## FIG 10

S11 — k=0

S12 — k=k+1

S13 — l=0

S14 — l=l+1

S15 — M(l)=U

S16 — l=L?   —

S17 — FOU(M(l)) → cosφk, sinφk

S18 — φk

S19 — k=K?   —

S20 — REGR(φ)

S21 — φ

S22 — φ → 17

FIG 11

S11 — k=0

S12 — k=k+1

S13 — l=0

S14 — l=l+1

S15 — M(l)=U

S16 — l=L? —

+

S17 — FOU(M(l)) → cosφk, sinφk

S19 — k=K? —

+

S26 — REGR(sinφ)

S27 — sinφ

S28 — REGR(cosφ)

S29 — cosφ

S30 — φ

S22 — φ → 17

## FIG 12

## FIG 13

Europäisches
Patentamt

European
Patent Office

Office européen
des brevets

**EUROPÄISCHER RECHERCHENBERICHT**

Nummer der Anmeldung

EP 14 15 7891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 559 970 A1 (MURATA MACHINERY LTD [JP]) 20. Februar 2013 (2013-02-20) * Zusammenfassung * * Absatz [0002] - Absatz [0023] * ----- | 1-13 | INV. G01D5/244 G01D5/241 |
| X | DE 10 2010 010805 A1 (SEW EURODRIVE GMBH & CO [DE]) 15. September 2011 (2011-09-15) * Zusammenfassung * * Absatz [0002] - Absatz [0025] * ----- | 1-13 | |
| A | DE 10 2005 035881 A1 (LUK LAMELLEN & KUPPLUNGSBAU [DE]) 2. März 2006 (2006-03-02) * Zusammenfassung * * Absatz [0035] * ----- | 3 | |

| RECHERCHIERTE SACHGEBIETE (IPC) |
|---|
| G01D |

Der vorliegende Recherchenbericht wurde für alle Patentansprüche erstellt

| Recherchenort | Abschlußdatum der Recherche | Prüfer |
|---|---|---|
| München | 3. September 2014 | Stenger, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 15 7891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2014

| Im Recherchenbericht angeführtes Patentdokument | Datum der Veröffentlichung | Mitglied(er) der Patentfamilie | Datum der Veröffentlichung |
|---|---|---|---|
| EP 2559970 A1 | 20-02-2013 | CN 102822635 A<br>EP 2559970 A1<br>KR 20120137419 A<br>TW 201144771 A<br>US 2013060521 A1<br>WO 2011129140 A1 | 12-12-2012<br>20-02-2013<br>20-12-2012<br>16-12-2011<br>07-03-2013<br>20-10-2011 |
| DE 102010010805 A1 | 15-09-2011 | KEINE | |
| DE 102005035881 A1 | 02-03-2006 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2527796 A2